# EUROPÄISCHE PATENTSCHRIFT

(11) **EP 3 119 565 B1**
(45) Veröffentlichungstag und Bekanntmachung des Hinweises auf die Patenterteilung: **23.07.2025**
(21) Anmeldenummer: 14711223.9
(22) Anmeldetag: 17.03.2014
(51) Int. Cl.: B25J 15/04

(54) **MONTAGEVORRICHTUNG ZUM AUSWECHSELN EINER GREIFERSPITZE EINES GREIFERFINGERS FÜR EIN ROBOTERSYSTEM**
ASSEMBLY DEVICE FOR REPLACING A GRIPPER TIP OF A GRIPPER FINGER FOR A ROBOTIC SYSTEM
DISPOSITIF DE MONTAGE POUR LE REMPLACEMENT D'UNE POINTE DE PRÉHENSION APPARTENANT À UN DOIGT DE PRÉHENSION POUR UN SYSTÈME ROBOTIQUE

(43) Veröffentlichungstag der Anmeldung: 25.01.2017
(73) Patentinhaber: F&P Robotics AG, 8152 Glattbrugg ZH (CH)
(72) Erfinder: DE CASTELBAJAC, Charles, CH-8004 Zürich (CH); FRUEH, Hansruedi, CH-8355 Aadorf (CH); WIJEYRATNE, Norman, CH-8404 Winterthur (CH)
(74) Vertreter: IPS Irsch AG
(86) Internationale Anmeldenummer: PCT/EP2014/055274
(87) Internationale Veröffentlichungsnummer: WO 2015/139717

(56) Entgegenhaltungen:
- CN-A- 103 358 120
- DE-U1- 202011 052 430
- JP-A- H06 262 281
- US-A- 4 583 724
- US-A- 4 613 277
- US-A- 4 699 414
- US-A1- 2002 064 362

## Beschreibung

Die Erfindung betrifft eine Montagevorrichtung zum Auswechseln einer Greiferspitze eines Greiferfingers für ein Robotersystem gemäss dem Oberbegriff des unabhängigen Anspruchs 1.

Greiferfinger für Robotersysteme sind im Stand der Technik seit langem in den unterschiedlichsten Varianten bekannt. Die bekannten Greiferfinger umfassen üblicherweise zwei Greiferbacken, die jeweils eine Greiferspitze tragen. Die Greiferbacken sind z.B. an Linearführungen beweglich befestigt und gegeneinander und voneinander weg bewegbar ausgebildet. Dadurch können auch die daran angebrachten beiden Greiferspitzen exakt gegeneinander oder auseinander bewegt werden, so dass Objekte gezielt aufgenommen oder wieder abgesetzt werden können. Derartige Greifersysteme kennt der Fachmann auch unter dem Begriff "Parallel-Greifer". Solche Systeme zum Greifen von Werkstücken sind zum Beispiel in der EP 0 2231 B1, der EP 0 993 916 B1 oder der EP 2 548 706 A1 bekannt. Weitere Greifersysteme sind bekannt aus der US 4 583 724, der CN103358120, der US2002/064362, der US4699414, und der US4613277.

Weitaus flexibler in der Anwendung sind sogenannte "Knickarmroboter", wie sie beispielweise in der WO 02/086637 A1 beschrieben sind und die vor allem für mobile Robotersysteme sehr häufig vorteilhaft eingesetzt werden.

Die Greiferfinger sind dabei heutzutage nicht einfach nur mechanische Greifwerkzeuge sondern sind hoch komplexe Systeme, die oft Sensoren verschiedenster Art enthalten können, wie beispielsweise optische Kameras, Ultraschallsensoren oder andere akustische Sensoren, wie zum Beispiel Mikrofone oder auch Wärmesensoren, Kraftsensoren usw.. Mit Hilfe solcher Sensoren kann ein entsprechendes Robotersystem über die Greiferfinger seine Umgebung "ertasten"und die für die Funktion des Robotersystems wesentlichen Eigenschaften seiner Umgebung detektieren.

So kann ein solches Robotersystem beispielsweise selbstständig erkennen, ob es sich bei einem zu greifenden Gegenstand um einen eher weichen Gegenstand, wie zum Beispiel eine Kunststoffflasche oder um einen eher harten Gegenstand, wie beispielsweise eine Glasflasche handelt und so entsprechend eine Kraft, mit der die Greiferfinger den Gegenstandes ergreifen sollen, selbstständig und flexibel auf einen optimalen Wert einstellen.

Das ist von besonderer Bedeutung, wenn ein solches Robotersystem zum Beispiel zur Durchführung filigraner Montagen mit sehr unterschiedlichen Komponenten verwendet wird oder wenn zum Beispiel ein Mensch bei verschiedenen unterschiedlichen Alltagstätigkeiten unterstützt werden soll. Insbesondere dann, wenn ein solches Robotersystem direkt mit dem Menschen interagiert ist eine hochsensible Sensorik selbstverständlich von grösster Bedeutung.

Dabei kommt der Greiferspitze eines Greiferfingers besondere Bedeutung zu, da einerseits die Greiferspitze zum Greifen eines zu bewegendes Objekt mit diesem in berührenden Kontakt gebracht werden muss und andererseits die Greiferspitze oft die für das Erkennen der Umgebung und zum Erkennen der Eigenschaften der greifenden Objekte erforderlichen Sensoren enthält. Daher muss die Greiferspitze in vielen Anwendungen auf die speziell auszuführenden Aufgaben bzw. auf die Eigenschaften der Arbeitsumgebung und somit letztlich auf die besonderen Eigenschaften der zu greifenden und zu bewegenden Objekte jeweils individuell abgestimmt werden. Damit ein und dasselbe Robotersystem für eine Vielzahl unterschiedlicher Aufgaben eingesetzt werden kann ist es daher bekannt, die Greiferspitzen austauschbar auszugestalten. So kann ein Satz verschiedener Greiferspitzen bereitgestellt werden, die sich z.B. in ihrer Greifgeometrie, dem Material, der Oberflächenbeschaffenheit, der Sensorik usw. unterscheiden können, die an bestimmte zu erledigende Aufgaben jeweils optimal angepasst sind. Damit können mit ein und demselben Robotersystem unterschiedlichste Aufgaben bewältigt werden, in dem einfach nur die Greiferspitzen des Greiferfingers ausgetauscht werden.

Insbesondere bei Anwendungen in denen die Robotersysteme hochkomplexe bzw. sehr unterschiedliche Aufgaben zu bewältigen haben und damit ein häufiger Austausch der Greiferspitzen notwendig ist, ist es natürlich wünschenswert, dass der Austausch der Greiferspitze möglichst einfach und bevorzugt maschinell bewerkstelligt werden kann. Das ist eines der wesentlichen Probleme bei bekannten Systemen, da die Greiferspitzen häufig in komplizierten Prozeduren von der Greiferbacke entfernt, beispielweise abgeschraubt werden müssen. Zusätzliche zwischen Greiferbacke und Greiferspitze eventuell ebenfalls vorhandene elektrische Verbindungsleitungen für die Sensorik, oder hydraulische oder pneumatische Verbindungen für allfällig vorhandene Antriebseinheiten zum Antrieb beweglicher Teile der Greiferspitze, müssen beim Umbau der Greiferspitze aufwändig aufgetrennt und wieder installiert werden.

Die Anmelderin hat daher einen Greiferfinger aus Greiferbacke und Greiferspitze sowie ein entsprechendes Robotersystem entwickelt, bei welchem die aus dem Stand der Technik beschrieben Nachteile zuverlässig behoben sind, so dass die Greiferspitze besonders einfach, effizient und vor allem auch maschinell, eventuell durch das entsprechende Robotersystem selbst austauschbar ist.

Obwohl der zuvor erwähnte neu entwickelte Greiferfinger der Anmelderin im Prinzip optimal für einen automatischen Austausch der Greiferspitze geeignet ist, hat sich herausgestellt, dass jedoch keine genügend ausgereifte Montagevorrichtung verfügbar ist, mit der sich eine Greiferspitze eines Greiferfingers für ein Robotersystem zuverlässig, einfach und damit effizient austauschen lässt.

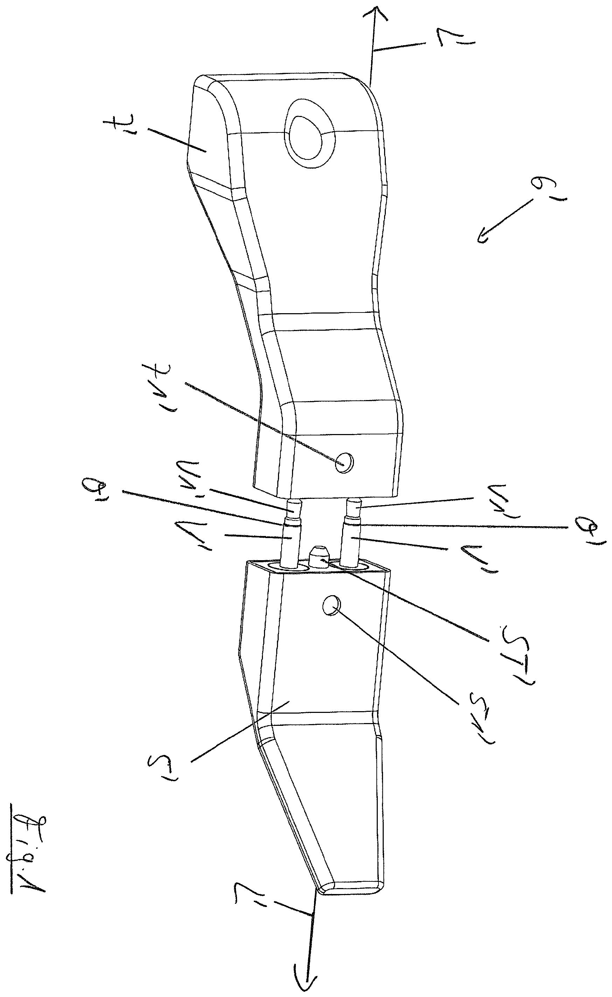

Aufgabe der Erfindung ist es daher eine Montagevorrichtung zum Auswechseln einer Greiferspitze eines Greiferfingers eines Robotersystems bereitzustellen, mit welcher sich eine Greiferspitze eines Greiferfingers für ein Robotersystem zuverlässig, einfach und effizient austauschen lässt. Im speziellen ist es unter anderem eine Aufgabe der Erfindung eine Montagevorrichtung vorzuschlagen, mit der sich neben einer Vielzahl von Greiferspitzen insbesondere auch eine Greiferspitze der anhand der Fig. 1 beschrieben Art austauschen lässt.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Montagevorrichtung mit einer Montageschiene umfassend einen Basisschlitten und einen Distanzschlitten zum Auswechseln einer Greiferspitze eines Greiferfingers für ein Robotersystem. Dabei umfasst der Basisschlitten ein erstes Fixiermittel zur Fixierung einer Greiferbacke des Greiferfingers und der Distanzschlitten umfasst ein zweites Fixiermittel zur Fixierung der Greiferspitze, so dass die Greiferbacke durch das erste Fixiermittel am Basisschlittens bezüglich einer longitudinalen Richtung fixierbar ist, und die Greiferspitze durch das zweite Fixiermittel am Distanzschlittens bezüglich der longitudinalen Richtung fixierbar ist. Erfindungsgemäss ist der Basisschlitten und der Distanzschlitten zwischen einer Verriegelungsposition und einer Entriegelungsposition entlang der longitudinalen Richtung derart gegeneinander verschiebbar angeordnet, dass die Greiferspitze in der Verriegelungsposition an der Greiferbacke verriegelt ist und die Greiferspitze in der Entriegelungsposition von der Greiferbacke entriegelt ist. Weiter ist Erfindungsgemäss das erste Fixiermittel ein erster Fixierbolzen und das zweite Fixiermittel ein zweiter Fixierbolzen.

Es ist damit ein wesentliches Kennzeichen der Erfindung, dass erstens die Montagevorrichtung zwei gegeneinander verschiebbare Aufnahmeschlitten, nämlich den Basisschlitten und den Distanzschlitten umfasst, so dass die beiden beim Auswechselvorgang, also bei der Montage bzw. Demomontage zu trennenden bzw. zusammenzusetzenden Teile, nämlich die Greiferbacke und die Greiferspitze des Greiferfingers, in der longitudinalen Richtung gegeneinander hin oder voneinander weg bewegbar am Montageschlitten angeordnet werden können. Und zweitens, dass die Greiferspitze und die Greiferbacke auch unabhängig voneinander am Distanzschlitten bzw. am Basisschlitten bezüglich der longitudinalen Richtung fixierbar sind, so dass während des Vorgangs des Auswechselns der Greiferspitze entweder nur die Greiferspitze oder nur die Greiferbacke oder beide gleichzeitig in Bezug auf die longitudinale Richtung an der Montagevorrichtung fixierbar sind. Das ermöglicht nicht nur den Vorgang des Trennens bzw. des Zusammensetzens der Teile zuverlässig und effizient durchzuführen, sondern verleiht der erfindungsgemässen Montagevorrichtung auch eine enorme Flexibilität bezüglich der zu montierenden bzw. demontierenden Teile.

Zwar nicht zwingend notwendig, jedoch ganz besonders vorteilhaft ist der erste Fixierbolzen derart senkrecht in Bezug auf die longitudinale Richtung am Basisschlitten angeordnet, so dass die Greiferbacke mittels des ersten Fixierbolzens in einer ersten Fixierbohrung der Greiferbacke am Basisschlitten bezüglich der longitudinalen Richtung fixierbar ist, und bevorzugt auch der zweite Fixierbolzen derart senkrecht in Bezug auf die longitudinale Richtung am Distanzschlitten angeordnet ist, dass die Greiferspitze mittels des zweiten Fixierbolzens in einer zweiten Fixierbohrung der Greiferspitze am Distanzschlitten bezüglich der longitudinalen Richtung fixierbar ist.

Durch das erste Fixiermittel und das zweite Fixiermittel ist die Greiferspitze und die Greiferbacke je nach spezieller geometrischer Ausführung oft lediglich nur in Bezug auf die longitudinale Richtung fixiert und weiter zumindest bezüglich in einer zur longitudinalen Richtung senkrechten Richtung noch mehr oder weniger frei beweglich. Damit ein zuverlässiger Austausch der Greiferspitze in der Praxis möglich ist, soll jedoch sehr häufig auch eine definierte Führung von Greiferspitze und / oder Greiferbacke entlang der longitudinalen Richtung gewährleistet sein. Daher umfassen das erste und / oder das zweite Fixiermittel in der Praxis häufig mehrere Komponenten (neben zum Fixieren) zum Führen von Greiferspitze und Greiferbacke. So kann das erste Fixiermittel (neben den erster Fixierbolzen) vorteilhaft gleichzeitig auch ein erstes Führungselement sein, insbesondere ein U-förmiges Führungselement zur Aufnahme und longitudinalen Führung der Greiferbacke sein, oder wie weiter unten noch erwähnt, alternativ oder zusätzlich auch noch den Blockierbolzen umfassen. Das kann entsprechend natürlich auch auf das zweite Fixiermittel zutreffen, das (neben den zweiten Fixierbolzen) vorteilhaft gleichzeitig auch ein zweites Führungselement sein kann, insbesondere ein U-förmiges Führungselement zur Aufnahme und longitudinalen Führung der Greiferspitze sein kann, oder wie nachfolgend noch erwähnt, alternativ oder zusätzlich auch noch den Blockierbolzen umfassen kann.

Das erste Führungselement und / oder das zweite Führungselement kann somit gleichzeitig oder alternativ auch noch einen Blockierbolzen umfassen, der derart senkrecht in Bezug auf die longitudinale Richtung angeordnet sein kann, dass die Greiferspitze und / oder die Greiferbacke mittels des Blockierbolzens in einer Blockieröffnung der Greiferspitze und / oder der Greiferbacke bezüglich der longitudinalen Richtung fixierbar ist. In der Praxis wird dabei häufig ein Arretierelement, insbesondere ein Feder belastetes Arretierelement derart vorgesehen sein, dass der Blockierbolzen mittels des Arretierelements der Blockieröffnung arrettierbar ist. Besonders bevorzugt kann der Blockierbolzen und / oder das Arretierelement selbstverständlich auch elektrisch, pneumatisch, hydraulisch oder anders, in an sich bekannter Weise betätigbar sein, wodurch der Automatisierungsgrad beim Auswechseln der Greiferspitze weiter erhöht werden kann.

Auch wenn es im Prinzip selbstverständlich möglich ist, dass ein Operateur von Hand die erfindungsgemässe Montagevorrichtung bedient, wird es in der Praxis bevorzugt so sein, dass die erfindungsgemässe Montagevorrichtung mit eigenen Antriebseinheiten ausgestattet ist, so dass beispielsweise der Distanzschlitten mittels einer Antriebsstange, insbesondere Antriebsschraube oder Antriebsschnecke, in Bezug auf den Basisschlitten verschiebar ausgestaltet ist, wobei zur Verschiebung des Basisschlittens und / oder des Distanzschlittens besonders vorteilhaft ein Antrieb, insbesondere ein elektrischer Motor vorgesehen wird und / oder die erfindungsgemässe Montagevorrichtung eine Datenverarbeitungsanlage umfasst oder an eine solche angeschlossen ist, so dass das Auswechseln des Greiferfingers vollautomatisiert und bevorzugt frei programmierbar möglich ist.

Die Erfindung wird im Folgenden an Hand der schematischen Zeichnung näher erläutert. Es zeigen:
- Fig. 1: eine spezielles Beispiel eines Greiferfingers in schematischer Darstellung ;
- Fig. 2: eine erfindungsgemässe Montagevorrichtung mit entriegeltem Greiferfinger;
- Fig. 3: die Montagevorrichtung der Fig. 2 mit Greiferfinger in verriegeltem Zustand.

Auch wenn die erfindungsgemässe Montagevorrichtung nicht auf die Montage einer Greiferspitze für einen speziellen Typ eines Greiferfingers beschränkt ist, und die Erfindung nicht einen Greiferfinger als solches bzw. nicht eine zu montierende Greiferspitze als solches betrifft, soll zum besseren Verständnis der Erfindung nachfolgend dennoch ein von der Anmelderin neu entwickelter Typ eines Greiferfingers kurz beschrieben werden, für welchen sich die erfindungsgemässe Montagevorrichtung besonders gut eignet.

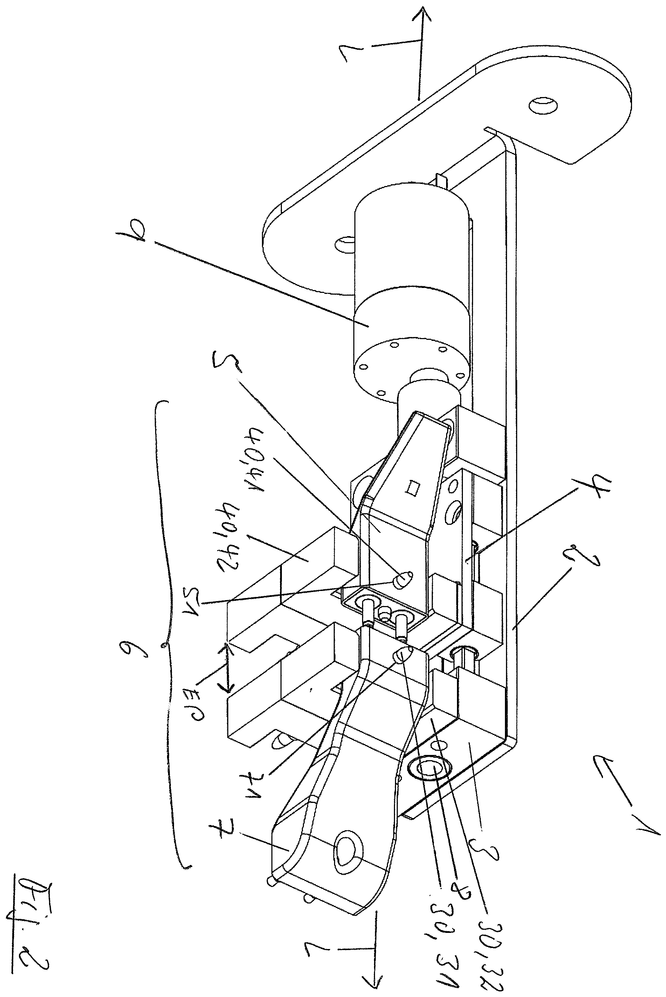

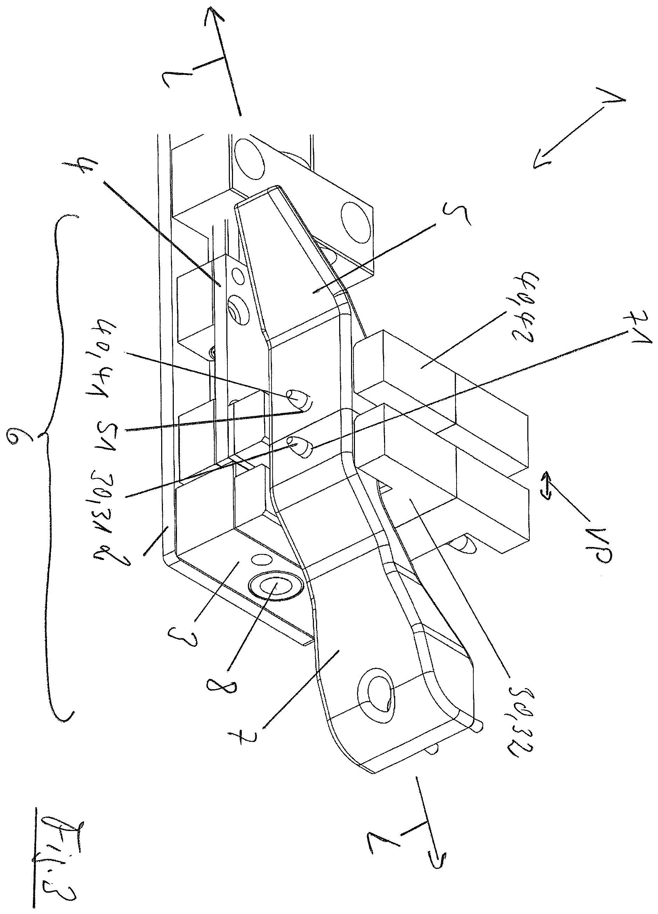

Um klar hervorzuheben, dass der Greiferfinger der Fig. 1 nicht Teil der vorliegenden Erfindung ist sondern lediglich ein Beispiel eines Greiferfingers darstellt, für welchen sich die erfindungsgemässe Montagevorrichtung zum Auswechseln der Greiferspitze besonders gut eignet, tragen die Bezugszeichen in Fig. 1 jeweils ein Hochkomma, während die Bezugszeichen zu Merkmalen der erfindungsgemässen Montagevorrichtung gemäss Fig. 2 bzw. Fig. 3 kein Hochkomma tragen.

Die Fig. 1 zeigt somit beispielhaft und in schematischer Weise einen Greiferfinger 6' eines Greifinstruments für ein Robotersystem, welcher Greiferfinger 6' zum Ergreifen von Objekten in an sich bekannter Weise eine Greiferbacke 7' und eine Greiferspitze 5', die sich entlang einer longitudinalen Richtung L' erstreckt. Die Greiferspitze 5' ist dabei im zusammengesetzten Zustand mittels zweier Verbindungselemente V' mit der Greiferbacke 7' lösbar verbunden. Das Verbindungselement V' ist dabei derart mit einer sich in die longitudinale Richtung L' erstreckenden, in Fig. 1 nicht direkt sichtbaren Verbindungsbuchse, die innerhalb der Greiferbacke 7' verborgen ist, in Form einer Steckverbindung verriegelbar, so dass im Verriegelungszustand ein Abkippen der Greiferspitze 5' in Bezug auf die longitudinale Richtung L' verhindert ist und gleichzeitig die Greiferspitze 5' gegen die Greiferbacke 7' in Bezug auf die longitudinale Richtung L' unter einer vorgebbaren longitudinalen Verriegelungskraft verriegelt ist.

Das Verbindungselement V' weist jeweils ein erstes Verriegelungselement V1' in Form einer als Klinke ausgebildeten Spitze auf und die Verbindungsbuchse umfasst dementsprechend ein zu dem ersten Verriegelungselement V1' geometrisch komplementäres zweites Verriegelungselement das derart ausgestaltet ist, dass zur Erzeugung der longitudinalen Verriegelungskraft F das erste Verriegelungselement V1' mit dem zweiten Verriegelungselement verriegelbar ist. Bei dem speziellen Beispiel gemäss Fig. 1 ist als zusätzliches Verriegelungselement ein elastisch wirkendes Kraftelement O' in Form eines O-Rings aus Kunststoff vorgesehen, so dass die gewünschte Verriegelungskraft besser bzw. optimal einstellbar ist.

In der Praxis können sowohl in der Greiferspitze 5' als auch in der Greiferbacke 7' unterschiedliche Sensoren, diverse elektronische Bauelemente aber auch weitere, z.B. mechanische, hydraulische, oder pneumatische Bauelemente vorgesehen sein, die in modernen Greiferfingern 6' in an sich bekannter Weise eine Vielzahl von Aufgaben erfüllen können.

Die Verbindungselemente V' sind im vorliegenden Beispiel der Fig. 1 gleichzeitig als elektrische Leitungen zur Übertragung elektrischer Energie zwischen der Greiferspitze 5' und der Greiferbacke 7' ausgelegt und dienen somit z.B. der Versorgung eventuell vorhandener Sensoren oder sonstiger elektronischer Bauelemente mit elektrischer Energie. Zusätzlich ist noch ein Stecker ST' zur Übertragung von Sensorsignalen zwischen der Greiferspitze 5' und der Greiferbacke 7' vorgesehen.

Die Fixierbohrungen 51' und 71', die jeweils in der Greiferspitze 5' und der Greiferbacke 7' vorgesehen sind dienen dabei zur Aufnahme hier nicht dargestellten Fixierbolzen, wie sie an der vorliegenden Erfindung vorgesehen sind, um die Greiferspitze 5' bzw. die Greiferspitze 7' an einer erfindungsgemässen Montagevorrichtung fixieren zu können.

Der Greiferfinger 6' der Fig. 1 zeichnet sich somit insbesondere dadurch aus, dass die Greiferspitze 5' durch eine einfache lineare Bewegung entlang der longitudinalen Richtung L' von der Greiferbacke 7' abgetrennt werden kann bzw. entsprechend zusammengesetzt werden kann.

Die nachfolgend anhand der Fig. 2 bzw. Fig. 3 beschriebene erfindungsgemässe Montagevorrichtung, die im Folgenden gesamthaft mit dem Bezugszeichen 1 bezeichnet ist, eignet sich sich dabei insbesondere für einen Typ eines Greiferfingers gemäss Fig. 1, wobei ausdrücklich darauf hingewiesen werden soll, dass die erfindungsgemässe Montagevorrichtung 1 keineswegs auf die Verwendung für einen Greiferfinger gemäss Fig. 1 beschränkt ist, sondern in der Praxis bei einer Vielzahl ganz anderer Typen von Greiferfingern ebenfalls sehr vorteilhaft und erfolgreich zum Austausch der Greiferspitze verwendet werden kann.

Anhand der schematischen Fig. 2 ist ein für die Praxis besonders bevorzugtes Ausführungsbeispiel einer erfindungsgemässen Montagevorrichtung 1 in einer schematischen Darstellung im Betriebszustand gezeigt. Wie zu erkennen ist, hat die Montagevorrichtung 1 bereits eine Greiferspitze 5 und eine Greiferbacke 7 aufgenommen, die jedoch in dem Fig. 2 dargestellten Prozessschritt noch voneinander getrennt sind und erst bei dem in Fig. 3 dargestellten darauffolgenden Prozessschritt des Auswechselvorgangs zu einem vollständigen Greiferfinger 6 zusammengesetzt worden ist.

Die erfindungsgemässe Montagevorrichtung 1 gem. Fig. 2 bzw. Fig. 3 zum Auswechseln einer Greiferspitze 5 eines Greiferfingers 6 für ein Robotersystem umfasst eine Montageschiene 2 mit einem Basisschlitten 3 und einem Distanzschlitten 4. Dabei umfasst der Basisschlitten 3 derart ein erstes Fixiermittel 30 zur Fixierung einer Greiferbacke 7 des Greiferfingers 6 und der Distanzschlitten 4 eine zweites Fixiermittel 40 zur Fixierung der Greiferspitze 5, dass die Greiferbacke 7 durch das erste Fixiermittel 30 am Basisschlitten 3 bezüglich einer longitudinalen Richtung L fixierbar ist, und die Greiferspitze 5 durch das zweite Fixiermittel 40 am Distanzschlitten 4 bezüglich der longitudinalen Richtung L fixierbar ist. Gemäss der vorliegenden Erfindung ist der Basisschlitten 3 und der Distanzschlitten 4 zwischen einer Verriegelungsposition VP und einer Entriegelungsposition EP entlang der longitudinalen Richtung L gegeneinander verschiebbar angeordnet, so dass die Greiferspitze 5 in der Verriegelungsposition VP an der Greiferbacke 7 verriegelt ist und die Greiferspitze 5 in der Entriegelungsposition EP von der Greiferbacke 7 entriegelt ist.

Im vorliegenden Erfindung ist das erste Fixiermittel 30 ein erster Fixierbolzen 31 und das zweite Fixiermittel 40 ist ein zweiter Fixierbolzen 41. In ein speziellen vorteilhafter Ausführungsbeispiel ist der erste Fixierbolzen 31 derart senkrecht in Bezug auf die longitudinale Richtung L am Basisschlitten 3 angeordnet ist, dass die Greiferbacke 7 mittels des ersten Fixierbolzens 31 in einer ersten Fixierbohrung 71 der Greiferbacke 7 am Basisschlitten 3 bezüglich der longitudinalen Richtung L fixiert ist. Völlig analog ist in ein Ausführungsbeispiel der zweite Fixierbolzen 41 derart senkrecht in Bezug auf die longitudinale Richtung L am Distanzschlitten 4 angeordnet, dass die Greiferspitze 5 mittels des zweiten Fixierbolzens 41 in einer zweiten Fixierbohrung 51 der Greiferspitze 5 am Distanzschlitten 4 bezüglich der longitudinalen Richtung L fixiert ist.

Als Halterungen für die Greiferspitze 5 bzw. die Greiferbacke 7 ist zusätzlich als weiteres erstes Fixiermittel 30 ein erstes Führungselement 32, sowie als weiteres zweites Fixiermittel 40 ein zweites Führungselement 42 vorgesehen, die hier jeweils in Form eines U-förmiges Führungselements zur Aufnahme und longitudinalen Führung der Greiferspitze 5 und der Greiferbacke 7 am Basisschlitten 3 bzw. am Distanzschlitten 4 angeordnet sind.

Der Auswechselvorgang zum Auswechseln der Greiferspitze 5 geht dabei im Detail wie folgt vonstatten. Die Montagevorrichtung 1 befindet sich zunächst in der Verriegelungsposition VP, so dass der Abstand des Distanzschlittens 4 vom Basisschlitten 3 gerade so ist, dass der sich im noch Verriegelungszustand befindliche, also noch zusammengesetzte Greiferfinger 6 derart in die beiden U-förmigen Führungselemente 32, 42 eingesetzt werden kann, dass die erste Fixierbohrung 71 den ersten Fixierbolzen 31 und die zweite Fixierbohrung 51 den zweiten Fixierbolzen 41 aufnehmen kann. Durch den ersten Fixierbolzen 31 und den zweiten Fixierbolzen 41 ist der Greiferfinger 6 somit mit der Greiferspitze 5 in Bezug auf den Distanzschlitten 4 und mit der Greiferbacke 7 in Bezug auf den Basisschlitten 3 bezüglich der longitudinalen Richtung L sicher fixiert. Zusätzlich gewähren die beiden Führungselemente 32, 42 dem Greiferfinger 6 die notwendige seitliche Führung entlang der longitudinalen Richtung L. Ist der Greiferfinger 5 derart sicher in der erfindungsgemässen Montagevorrichtung 1 installiert, wird die Montagevorrichtung 1 aus der Verriegelungsposition VP in die Entriegelungsposition EP gebracht, so dass wie in Fig. 3 zu sehen ist, der Greiferfinger 6 derart zerlegt ist, dass die Greiferspitze 5 von der Greiferbacke 7 entriegelt und vollständig von dieser getrennt ist.

Sodann wird durch eine in den Fig. 2 und Fig.3 aus Gründen der Übersichtlichkeit nicht dargestellte Einrichtung der Greiferfinger 5 allein aus dem Führungselement 42 entnommen und sodann in umgekehrter Weise ein anderer Greiferfinger 5 in das Führungselement 42 eingelegt. Danach wird die Montagevorrichtung 1 wieder in die Verriegelungsposition VP gebraucht, wodurch die neue Greiferspitze 5 mit der sich noch im Führungselement 32 befindlichen Greiferbacke 8 wieder zusammengeführt und verriegelt wird, wodurch wieder ein zusammengesetzter voll funktionsfähiger Greiferfinger 6 entsteht, der zur weiteren Verwendung dann nur noch gesamthaft aus der Montagevorrichtung 1 entnommen werden muss.

Um die Montagevorrichtung 1 aus der Verriegelungsposition VP in die Entriegelungsposition EP und umgekehrt zu überführen, ist der Distanzschlitten 4 über einer Antriebsstange 8, die hier eine an sich bekannte Antriebsschraube ist, mittels eines elektrischen Antriebs 9 relativ zum Basisschlitten 3 entlang der longitudinalen Richtung L verschiebbar. Der Fachmann versteht, dass in anderen Ausführungsbeispielen die relative Verschiebung von Basisschlitten 3 und Distanzschlitten 4 auch anders in an sich bekannter Weise, z.B. auch ohne elektrischen Antrieb 9 oder auch ohne Antriebsstange bewerkstelligt werden kann und dass statt des Distanzschlittens auch der Basisschlitten, oder gar beide in der longitudinalen Richtung beweglich an der Montageschiene angeordnet sein können.

## Patentansprüche

1. Montagevorrichtung mit einer Montageschiene (2) umfassend einen Basisschlitten (3) und einen Distanzschlitten (4) zum Auswechseln einer Greiferspitze (5) eines Greiferfingers (6) für ein Robotersystem, wobei der Basisschlitten (3) ein erstes Fixiermittel (30) zur Fixierung einer Greiferbacke (7) des Greiferfingers (6) umfasst und der Distanzschlitten (4) eine zweites Fixiermittel (40) zur Fixierung der Greiferspitze (5) umfasst, so dass die Greiferbacke (7) durch das erste Fixiermittel (30) am Basisschlittens (3) bezüglich einer longitudinalen Richtung (L) fixierbar ist, und die Greiferspitze (5) durch das zweite Fixiermittel (40) am Distanzschlittens (4) bezüglich der longitudinalen Richtung (L) fixierbar ist, wobei der Basisschlitten (3) und der Distanzschlitten (4) zwischen einer Verriegelungsposition (VP) und einer Entriegelungsposition (EP) entlang der longitudinalen Richtung (L) gegeneinander verschiebbar angeordnet sind, so dass die Greiferspitze (5) in der Verriegelungsposition (VP) an der Greiferbacke (7) verriegelt ist und die Greiferspitze (5) in der Entriegelungsposition (EP) von der Greiferbacke (7) entriegelt ist, wobei das erste Fixiermittel (30) ein erster Fixierbolzen (31) ist und das zweite Fixiermittel (40) ein zweiter Fixierbolzen (41) ist, **dadurch gekennzeichnet, dass** zur vollautomatisierten Auswechslung des Greiferfingers eine Datenverarbeitungsanlage vorgesehen ist, wobei die Montagevorrichtung durch die Datenverarbeitungsanlage ansteuerbar ist.

2. Montagevorrichtung nach einem der Anspruch 1, wobei der erste Fixierbolzen (31) derart senkrecht in Bezug auf die longitudinale Richtung (L) am Basisschlitten (3) angeordnet ist, dass die Greiferbacke (7) mittels des ersten Fixierbolzens (31) in einer ersten Fixierbohrung (71) der Greiferbacke (7) am Basisschlitten (3) bezüglich der longitudinalen Richtung (L) fixierbar ist.

3. Montagevorrichtung nach einem der vorangehenden Ansprüche, wobei der zweite Fixierbolzen (41) derart senkrecht in Bezug auf die longitudinale Richtung (L) am Distanzschlitten (4) angeordnet ist, dass die Greiferspitze (5) mittels des zweiten Fixierbolzens (41) in einer zweiten Fixierbohrung (51) der Greiferspitze (5) am Distanzschlitten (4) bezüglich der longitudinalen Richtung (L) fixierbar ist.

4. Montagevorrichtung nach einem der vorangehenden Ansprüche, wobei das erste Fixiermittel (30) ein erstes Führungselement (32) ist, insbesondere ein U-förmiges Führungselement zur Aufnahme und longitudinalen Führung der Greiferbacke (7) ist.

5. Montagevorrichtung nach einem der vorangehenden Ansprüche, wobei das zweite Fixiermittel (40) ein zweites Führungselement (42) ist, insbesondere ein U-förmiges Führungselement zur Aufnahme und longitudinalen Führung der Greiferspitze (5) ist.

6. Montagevorrichtung nach einem der Ansprüche 4 oder 5, wobei das erste Führungselement (32) und / oder das zweite Führungselement (42) einen Blockierbolzen umfasst, der derart senkrecht in Bezug auf die longitudinale Richtung (L) angeordnet ist, dass die Greiferspitze (5) und / oder die Greiferbacke (7) mittels des Blockierbolzens in einer Blockieröffnung der Greiferspitze (5) und / oder der Greiferbacke (7) bezüglich der longitudinalen Richtung (L) fixierbar ist.

7. Montagevorrichtung nach Anspruch 6, wobei ein Arretierelement, insbesondere ein Feder belastetes Arretierelement derart vorgesehen ist, dass der Blockierbolzen mittels des Arretierelements der Blockieröffnung arrettierbar ist.

8. Montagevorrichtung nach einem der vorangehenden Ansprüche, wobei der Distanzschlitten (4) mittels einer Antriebsstange (8), insbesondere Antriebsschraube oder Antriebsschnecke, in Bezug auf den Basisschlitten (3) verschiebar ist.

9. Montagevorrichtung nach einem der vorangehenden Ansprüche wobei zur Verschiebung des Basisschlittens (3) und / oder des Distanzschlittens (4) ein Antrieb (9), insbesondere elektrischer Motor vorgesehen ist.

10. Montagevorrichtung nach einem der vorangehenden Ansprüche, wobei die Datenverarbeitungsanlage, eine frei programmierbare Datenverarbeitungsanlage ist.

## Claims

1. Mounting device having a mounting rail (2) comprising a base carriage (3) and a distance carriage (4) for replacing a gripper tip (5) of a gripper finger (6) for a robot system, wherein the base carriage (3) comprises a first fixing agent (30) for fastening a gripper jaw (7) of the gripper finger (6) and the distance carriage (4) comprises a second fixing agent (40) for fastening the gripper tip (5) in such a manner that the gripper jaw (7) can be fastened by the first fixing agent (30) to the base carriage (3) in relation to a longitudinal direction (L) and the gripper tip (5) can be fastened by the second fixing agent (40) to the distance carriage (4) in relation to the longitudinal direction (L), wherein the base carriage (3) and the distance carriage (4) are arranged movably against each other between a locked position (VP) and an unlocked position (EP) along the longitudinal direction (L) in such a manner that the gripper tip (5) is locked at the gripper jaw (7) in the locked position (VP) and the gripper tip (5) is unlocked from the gripper jaw (7) in the unlocked position (EP), wherein the first fixing agent (30) is a first fixing bolt (31) and the second fixing agent (40) is a second fixing bolt (41), **characterized in that** a data processing system is provided for the fully automatic replacement of the gripper finger, wherein the mounting device can be controlled by the data processing system.

2. Mounting device according to claim 1, wherein the first fixing bolt (31) is arranged perpendicular in relation to the longitudinal direction (L) at the base carriage (3) in such a manner that the gripper jaw (7) can be fastened by means of the first fixing bolt (31) in a first fixing hole (71) of the gripper jaw (7) at the base carriage (3) in relation to the longitudinal direction (L).

3. Mounting device according to one of the preceding claims, wherein the second fixing bolt (41) is arranged perpendicular in relation to the longitudinal direction (L) at the distance carriage (4) in such a manner that the gripper tip (5) can be fastened by means of the second fixing bolt (41) in a second fixing hole (51) of the gripper tip (5) at the distance carriage (4) in relation to the longitudinal direction (L).

4. Mounting device according to one of the preceding claims, wherein the first fixing agent (30) is a first guiding element (32), in particular a U-shaped guiding element for receiving and guiding longitudinally the gripper jaw (7).

5. Mounting device according to one of the preceding claims, wherein the second fixing agent (40) is a second guiding element (42), in particular a U-shaped guiding element for receiving and guiding longitudinally the gripper tip (5).

6. Mounting device according to one of the claims 4 or 5, wherein the first guiding element (32) and/or the second guiding element (42) comprises a blocking bolt which is arranged perpendicular in relation to the longitudinal direction (L) in such a manner that the gripper tip (5) and/or the gripper jaw (7) can be fastened by means of the blocking bolt in a blocking opening of the gripper tip (5) and/or the gripper jaw (7) in relation to the longitudinal direction (L).

7. Mounting device according to claim 6, wherein a locking element, in particular a spring-loaded locking element is provided in such a manner that the blocking bolt can be locked by means of the locking element of the blocking opening.

8. Mounting device according to one of the preceding claims, wherein the distance carriage (4) is movable by means of a driving rod (8), in particular a driving screw or worm, in relation to the base carriage (3).

9. Mounting device according to one of the preceding claims, wherein a drive (9), in particular an electric motor is provided for displacing the base carriage (3) and/or the distance carriage (4).

10. Mounting device according to one of the preceding claims, wherein the data processing system is a freely programmable data processing system.

## Revendications

1. Dispositif de montage avec un rail de montage (2) comprenant un chariot de base (3) et un chariot d'écartement (4) pour le remplacement d'une pointe de préhension (5) d'un doigt de préhension (6) pour un système de robot, le chariot de base (3) comprenant un premier moyen de fixation (30) pour la fixation d'une mâchoire de préhension (7) du doigt de préhension (6) et le chariot d'écartement (4) comprenant un deuxième moyen de fixation (40) pour la fixation de la pointe de préhension (5), de sorte que la mâchoire de préhension (7) peut être fixée par le premier moyen de fixation (30) sur le chariot de base (3) par rapport à une direction longitudinale (L), et la pointe de préhension (5) peut être fixée par le deuxième moyen de fixation (40) sur le chariot d'écartement (4) par rapport à la direction longitudinale (L), le chariot de base (3) et le chariot d'écartement (4) étant disposés de manière déplaçable l'un par rapport à l'autre entre une position de verrouillage (VP) et une position de déverrouillage (EP) le long de la direction longitudinale (L), de sorte que la pointe de préhension (5) est verrouillée dans la position de verrouillage (VP) sur la mâchoire de préhension (7) et la pointe de préhension (5) est déverrouillée dans la position de déverrouillage (EP) de la mâchoire de préhension (7), le premier moyen de fixation (30) étant un premier boulon de fixation (31) et le deuxième moyen de fixation (40) étant un deuxième boulon de fixation (41), **caractérisé en ce qu'**une installation de traitement de données est prévue pour le remplacement entièrement automatisé du doigt de préhension, le dispositif de montage pouvant être commandé par l'installation de traitement de données.

2. Dispositif de montage selon l'une quelconque des revendications 1, le premier boulon de fixation (31) étant disposé perpendiculairement par rapport à la direction longitudinale (L) sur le chariot de base (3) de telle sorte que la mâchoire de préhension (7) peut être fixée au moyen du premier boulon de fixation (31) dans un premier alésage de fixation (71) de la mâchoire de préhension (7) sur le chariot de base (3) par rapport à la direction longitudinale (L).

3. Dispositif de montage selon l'une quelconque des revendications précédentes, le deuxième boulon de fixation (41) étant disposé perpendiculairement par rapport à la direction longitudinale (L) sur le chariot d'écartement (4) de telle sorte que la pointe de préhension (5) peut être fixée au moyen du deuxième boulon de fixation (41) dans un deuxième alésage de fixation (51) de la pointe de préhension (5) sur le chariot d'écartement (4) par rapport à la direction longitudinale (L).

4. Dispositif de montage selon l'une quelconque des revendications précédentes, le premier moyen de fixation (30) étant un premier élément de guidage (32), en particulier un élément de guidage en forme de U pour la réception et le guidage longitudinal de la mâchoire de préhension (7).

5. Dispositif de montage selon l'une quelconque des revendications précédentes, le deuxième moyen de fixation (40) étant un deuxième élément de guidage (42), en particulier un élément de guidage en forme de U pour la réception et le guidage longitudinal de la pointe de préhension (5).

6. Dispositif de montage selon l'une quelconque des revendications 4 ou 5, le premier élément de guidage (32) et/ou le deuxième élément de guidage (42) comprenant un boulon de blocage qui est disposé perpendiculairement par rapport à la direction longitudinale (L) de telle sorte que la pointe de préhension (5) et/ou la mâchoire de préhension (7) peut être fixée au moyen du boulon de blocage dans une ouverture de blocage de la pointe de préhension (5) et/ou de la mâchoire de préhension (7) par rapport à la direction longitudinale (L).

7. Dispositif de montage selon la revendication 6, un élément d'arrêt, en particulier un élément d'arrêt sollicité par ressort, étant prévu de telle sorte que le boulon de blocage peut être arrêté au moyen de l'élément d'arrêt de l'ouverture de blocage.

8. Dispositif de montage selon l'une quelconque des revendications précédentes, le chariot d'écartement (4) pouvant être déplacé par rapport au chariot de base (3) au moyen d'une tige d'entraînement (8), en particulier une vis d'entraînement ou une vis sans fin d'entraînement.

9. Dispositif de montage selon l'une quelconque des revendications précédentes, un entraînement (9), en particulier un moteur électrique, étant prévu pour le déplacement du chariot de base (3) et/ou du chariot d'écartement (4).

10. Dispositif de montage selon l'une quelconque des revendications précédentes, l'installation de traitement de données étant une installation de traitement de données librement programmable.
